# EUROPÄISCHE PATENTSCHRIFT

(11) **EP 0 871 353 B1**
(45) Veröffentlichungstag und Bekanntmachung des Hinweises auf die Patenterteilung: **31.05.2000**
(21) Anmeldenummer: 96942177.5
(22) Anmeldetag: 19.12.1996
(51) Int. Cl.: A01G 9/12

(54) **PFLANZBEHÄLTER MIT EINER PFLANZSTAB-FIXIEREINRICHTUNG**
PLANT CONTAINER WITH A PLANT STEM SECURING DEVICE
CONTENANT POUR PLANTE AVEC DISPOSITIF DE FIXATION DE TIGE

(30) Priorität: 19.12.1995 AT 205995; 15.07.1996 AT 127195
(43) Veröffentlichungstag der Anmeldung: 21.10.1998
(73) Patentinhaber: Payr, Hubert, 2483 Ebreichsdorf (AT)
(72) Erfinder: Payr, Hubert, 2483 Ebreichsdorf (AT)
(74) Vertreter: Kopecky, Helmut, Dipl.-Ing. Kopecky & Schwarz Patentanwälte
(86) Internationale Anmeldenummer: AT9600256
(87) Internationale Veröffentlichungsnummer: WO9722240

(56) Entgegenhaltungen:
- DE-A- 2 323 763
- GB-A- 1 109 927
- GB-A- 2 274 571

## Beschreibung

Die Erfindung betrifft einen Pflanzbehälter mit einer Pflanzstab-Fixiereinrichtung.

Pflanzstäbe, die Topfpflanzen stützen sollen, werden üblicherweise in das Pflanzmaterial, wie in Topferde bzw. bei Hydrokulturen in Hydro-Material, gesteckt. Die Pflanzstäbe können sich mit der Zeit lockern und bilden dann keine zuverlässige Stütze mehr für die Pflanze. Dies ist verstärkt der Fall, wenn die Pflanze in eine bestimmte Richtung wächst. Ein Lockern des Stabes kann aber auch beim Transport der Topfpflanze und vor allem auch im Außenbereich, wenn die Topfpflanze dem Wind und Wetter ausgesetzt ist, auftreten.

Zur Lösung dieses Problems hat man versucht, die Pflanzstäbe über Schnüre oder Drähte mittels in eine benachbarte Wand geschlagener Nägel zu befestigen. Hierbei stellt sich das Problem, daß die Topfpflanze dann nicht mehr verstellt bzw. gewendet werden kann.

Um den Pflanzstab gegenüber dem Pflanztopf zu fixieren, ist es bekannt (CH-A - 636.748), am Rand des Pflanztopfes eine Schraubzwinge zu befestigen, von der aus ein gegen das Zentrum des Pflanztopfes gerichtete Schiene ausgeht, wobei die Schiene mittels der Schraubzwinge gegen den Rand des Pflanztopfes gepreßt wird. An dieser Schiene ist mittels einer weiteren Schraubzwinge der Pflanzstab befestigbar.

Diese bekannte Einrichtung weist jedoch den Nachteil auf, daß sich der Pflanzstab nach wie vor zur Seite neigen kann, da von der Pflanze auf den Pflanzstab wirkende Kräfte lediglich in Richtung der Schiene verlaufen dürfen, um von diesem in den Pflanztopf weitergeleitet werden zu können.

Eine Pflanzstab-Fixiereinrichtung, mit der auf den Pflanzstab von allen Richtungen wirkende Kräfte in den Pflanztopf eingeleitet werden können, ist aus der CH-A - 408.516 bekannt. Gemäß diesem Dokument ist ein am Rand des Pflanztopfes festklemmbarer Träger vorgesehen, der einen in Richtung zum Zentrum des Pflanztopfes ragenden rohrartig ausgebildeten Tragarm aufweist. In diesen Tragarm ist ein Tragzapfen einsetzbar und fixierbar, wobei der Tragzapfen gegenüber dem Tragarm in radialer Richtung des Pflanztopfes verschiebbar ist. Dieser Tragzapfen trägt an seinem inneren, d.h. zum Zentrum des Pflanztopfes gerichteten Ende, eine am unteren Ende geschlossene Hülse, in die der Pflanzstab einsetzbar ist. Hierbei kommt der Pflanzstab zwar nicht mit dem Erdreich der Topfpflanze in Berührung, es werden jedoch über den Pflanzstab sehr große Kräfte über den Tragzapfen in den am Rand des Pflanztopfes festklemmbaren Tragarm eingeleitet, so daß dieser dementsprechend starr und klobig ausgebildet sein muß. Diese bekannte Pflanzstab-Fixiereinrichtung ist nicht nur sehr aufwendig in der Konstruktion und dementsprechend teuer in der Herstellung, sondern sie beeinträchtigt durch die sperrige und klobige Aushildung den Anblick der Topfpflanze. Zudem werden sämtliche Kräfte ausschließlich an den Rand des Pflanztopfes weitergeleitet, so daß dieser einer sehr hohen Belastung standhalten muß.

Aus der DE-C - 28 35 939 ist es bekannt, eine Halterung für einen Pflanzstab mit dem Pflanzgefäß integral auszubilden. Hierbei kann der Pflanzstab jedoch lediglich im Randbereich des Pflanzgefäßes angeordnet werden, da andernfalls die mit dem Pflanzgefäß integrierte Halterung weit in das Gefäßinnere ragen müßte, was jedoch Schwierigkeiten und hohe Kosten bei der Herstellung des Pflanzgefäßes bereitet.

Gemäß der AT-B - 327.598 sind innerhalb des Pflanzgefäßes am Boden desselben Ausnehmungen vorgesehen, in die ein Pflanzstab einsetzbar ist. Hierbei muß jedoch der Pflanzstab vor Auffüllen des Pflanzgefäßes mit Erde eingesetzt werden. Ein nachträgliches Anbringen ist nur schwierig möglich, da die am Boden des Pflanzgefäßes vorhandene Ausnehmung erst freigelegt werden müßte. Problematisch ist hierbei die gute Abstützung der Pflanzen, da der Pflanzstab lediglich mit seinem unteren Ende gegenüber dem Pflanzgefäß fixiert ist.

Gemäß der EP-A - 0 089 291 ist ein Pflanzgefäß in seinen Eckbereichen mit Ösen versehen, in die Pflanzstäbe eingesetzt werden können. Auch hier besteht keine Möglichkeit, den Pflanzstab in größerer Entfernung vom Rand des Pflanzgefäßes, d.h. in der Nähe des Stammes der Pflanze, anzuordnen.

Aus der FR-A - 2 671 453 ist ein Pflanzbehälter mit einer Pflanzstab-Fixiereinrichtung der eingangs beschriebenen Art bekannt. Bei dieser bekannten Einrichtung ist die Pflanzstab-Fixiereinrichtung von mehreren, linear hintereinander angeordneten und zu einer starren Einheit zusammengefaßten Hülsen gebildet, wobei der Pflanzstab durch eine dieser Hülsen hindurch in das im Pflanzbehälter angeordnete Erdreich gesteckt werden kann. Die Pflanzstab-Fixiereinrichtung selbst wird mittels eines an einem Ende von ihr angeordneten Stabes in eine am Rand des Pflanzbehälters angeordnete Bohrung eingesteckt, wobei ein Verschwenken der Pflanzstab-Fixiereinrichtung um die Achse der Bohrung des Pflanzbehälters dadurch vermieden wird, daß an dem Stab der Pflanzstab-Fixiereinrichtung eine Feder angeordnet ist, die in eine Nut der am Pflanzbehälter angeordneten Bohrung eingreift. Eine Einrichtung dieser Art erfordert einen sehr aufwendig gestalteten Pflanzbehälter mit einer entsprechenden Wandstärke zur Aufnahme des an der Pflanzstab-Fixiereinrichtung vorgesehenen Stabes. Für einen dünnwandigen Pflanzbehälter ist ein eigener Aufsatz erforderlich, der den Pflanzbehälter nach oben hin verlängert und der dann dickwandig gestaltet ist und die Bohrung zur Aufnahme des Stabes für die Pflanzstab-Fixiereinrichtung trägt. Dies ist ebenfalls kostenaufwendig und herstellungsintensiv. Ein weiterer Nachteil der bekannten Einrichtung ist noch darin zu sehen, daß beim Auftreten größerer Kräfte an der Pflanzstab-Fixierineinrichtung in horizontaler Richtung - was insbesondere dann der Fall ist, wenn der Pflanzstab in eine Hülse in größerer Entfernung vom Rand des Pflanzbehälters eingesetzt ist - der Pflanzstab nicht mehr sicher gehalten ist bzw. sich die Kräfte in die Wandung des Pflanzbehälters übertragen, so daß es dann dort zu einer Beschädigung der Wandung kommen kann.

Bei der bekannten Konstruktion ergibt sich zudem eine Beeinträchtigung des Aussehens des Pflanzbehälters durch die die Wand des Pflanzbehälters nach außen durchsetzenden Nuten, in denen die Feder des Stabes der Pflanzstab-Fixiereinrichtung eingreift. Weiters ergibt auch der relativ dicke obere Rand des Pflanzbehälters ein unschönes Bild. Zudem ragt die Pflanzstab-Fixiereinrichtung über den oberen Rand hinaus, so daß auch die Pflanzstab-Fixiereinrichtung das Aussehen des Pflanzbehälters beeinträchtigt.

Gemäß einer ersten Ausführungsform - DE-A 2 323 763 - ragt das untere Ende des Pflanzstabes in eine Hülse, wodurch der Pflanzstab im Bodenbereich des Pflanzbehälters fixiert ist.

Gemäß einer weiteren Ausführungsform wird das untere Ende des Pflanzstabes in einem Steckloch fixiert, das an einer den Pflanzbehälter in Höhe des Randes desselben überspannenden Traverse angeordnet ist.

Eine ähnliche Einrichtung ist aus der GB-A- 2 274 571 bekannt, wobei das Steckloch für den Pflanzstab an der Kreuzungsstelle von sich radial erstreckenden Armen angeordnet ist. Zur Befestigung der Arme am Rand des Pflanzbehälters dient ein sich um den Umfang des Pflanzbehälters erstreckender Ring, der den Rand des Pflanzbehälters übergreift.

Die Erfindung bezweckt die Vermeidung der geschilderten Nachteile und Schwierigkeiten und stellt sich die Aufgabe, einen Pflanzbehälter mit einer Pflanzstab-Fixiereinnchtung zu schaffen, bei dem der Pflanzstab zuverlässig und sicher gegenüber dem Pflanzbehälter fixiert ist, wobei ein Lockern des Pflanzstabes auch nach längerer Zeit nicht auftritt und auf den Pflanzstab wirkende Kräfte sicher in den Pflanzbehälter übergeleitet werden können; die über den Pflanzstab auf den Pflanzbehälter einwirkenden Kräfte sollen den Pflanzbehälter möglichst gleichmäßig und nicht nur punktuell belasten, so daß die Bruchgefahr für den Pflanzbehälter minimiert ist. Die Pflanzstab-Fixiereinrichtung soll auch nachträglich an den Pflanzbehälter in einfacher Art und Weise anbringbar sein, d.h. ohne größere Manipulationen zu erfordern. Weiters soll der Pflanzbehälter mitsamt der Pflanzstab-Fixiereinrichtung nur aus wenigen Teilen bestehen, die einfach und kostengünstig herstellbar sind und auch das Aussehen des Pflanztopfes nach Anbringung der Pflanzstab-Fixiereinrichtung und des Pflanzstabes nur wenig stören.

Diese Aufgabe wird erfindungsgemäß dadurch gelöst, daß die Pflanzstab-Fixiereinrichtung zwei im vorbestimmten Abstand angeordnete Gegenkupplungsteile aufweist und daß im Randbereich des Pflanzbehälters mindestens zwei korrespondierend zu den Gegenkupplungsteilen im Abstand voneinander angeordnete Kupplungsteile vorgesehen sind.

Erfindungsgemäß ergibt sich eine Dreipunkt-Abstützung des Pflanzstabes in der Ebene des Randbereiches des Pflanzbehälters, wodurch der Pflanzstab selbst bei hohen Kräften sicher gehalten ist. Die Kräfte teilen sich auf zwei Stellen auf, so daß die Wand des Pflanzbehälters nur relativ gering belastet wird.

Besonders einfach herstellbar ist der Pflanzbehälter, wenn die Kupplungsteile, wie an sich bekannt, integral mit der Seitenwand des Pflanzbehälters ausgebildet sind.

Um den Pflanzstab in unterschiedlichen Lagen gegenüber dem Pflanzbehälter anordnen zu können, ist zweckmäßig eine Mehrzahl von Kupplungsteilen im Randbereich des Pflanzbehälters angeordnet, wobei jeweils zwei dieser Kupplungsteile in einem Abstand angeordnet sind, der dem Abstand der Gegenkupplungsteile der Pflanzstab-Fixiereinrichtung entspricht, wobei vorteilhaft die Kupplungsteile am Randbereich des Pflanzbehälters in untereinander gleichen Abständen angeordnet sind.

Eine variantenreiche Befestigung des Pflanzstabes am Pflanzbehälter ist dann gegeben, wenn die Pflanzstab-Fixiereinrichtung mit zwei Gegenkupplungsteilen versehen ist, die in einer Distanz vorgesehen sind, die dem doppelten oder einem mehrfachen Abstand zweier Kupplungsteile entspricht.

Ein konstruktiv einfacher Pflanzbehälter ist dadurch gekennzeichnet, daß der Kupplungsteil - wie an sich bekannt - von einer Hülse oder einem Zapfen gebildet ist und der Gegenkupplungsteil von einem Zapfen oder einer Hülse gebildet ist.

Gemäß einer bevorzugten Ausführungsform der eingangs beschriebenen Art erstrecken sich der Kupplungsteil und der Gegenkupplungsteil über einen vorbestimmten Umfangsbereich des Randbereiches, wobei zweckmäßig der Kupplungsteil als Lasche oder Schlitz und der Gegenkupplungsteil als Schlitz oder Lasche ausgebildet sind.

Soll ein Pflanzbehälter nachträglich mit einer Pflanzstab-Fixiereinrichtung versehen werden, so ist zweckmäßig der Kupplungsteil an der Seitenwand des Pflanzbehälters angeschraubt oder ist gemäß einer anderen Ausführungsform der Kupplungsteil an der Seitenwand des Pflanzbehälters angeklebt.

Optisch wenig störend ist es, wenn der Kupplungsteil an der Innenseite der Seitenwand des Pflanzbehälters vorgesehen ist.

Weitere Variationsmöglichkeiten zur Anordnung des Pflanzstabes ergeben sich, wenn die Pflanzstab-Fixiereinrichtung mit zwei oder mehreren, jeweils im unterschiedlichen Abstand vom Gegenkupplungsteil vorgesehenen Halteteilen versehen ist.

Vorzugsweise ist der Halteteil als Durchgangsöffnung ausgebildet, wobei zweckmäßig die Durchgangsöffnung mit ausbrechbaren Teilen versehen ist, so daß sie vergrößerbar und an den Durchmesser des Pflanzstabes anpaßbar ist.

Eine weitere bevorzugte Ausführungsform ist dadurch gekennzeichnet, daß der Halteteil als Stützlasche ausgebildet ist, an der der Pflanzstab zum Anliegen bringbar ist und an der der Pflanzstab mittels einer Klemmeinrichtung, vorzugsweise einem Kabelbinder, fixierbar ist.

Besonders stabil ist der Pflanzstab dann befestigt, wenn die Pflanzstab-Fixiereinrichtung in sich starr ausgebildet ist.

Zum Ausgleich unterschiedlicher Wandneigungen verschiedener Pflanzbehälter sind vorzugsweise der Kupplungsteil und der Gegenkupplungsteil als Gelenkteile ausgebildet.

Gemäß einer weiteren Ausführungsform soll die Herstellung eines Pflanzbehälters mit einer Pflanzstab-Fixiereinrichtung besonders einfach und kostengünstig sein. Insbesondere sollen die Werkzeugkosten gering gehalten werden können und trotzdem eine universelle Anwendbarkeit für unterschiedlichste Pflanzbehältergrößen gegeben sein, wobei auf eine Einsatzmöglichkeit für große Pflanzbehälter Wert gelegt wird.

Dies wird vorteilhaft dadurch erreicht, daß der Gegenkupplungsteil mit mindestens einer Pflanzstab-Fixiereinrichtung mittels einer Gelenkverbindung verbunden ist.

Besonders einfach herstellbar sind Kupplungs- und Gegenkupplungsteile, wenn die Gelenkverbindung als Zapfen-Hülsen-Verbindung ausgebildet ist, wobei vorteilhaft der Zapfen am Gegenkupplungsteil und die Hülse an der Pflanzstab-Fixiereinrichtung vorgesehen ist.

Eine besonders einfache Herstellung des Pflanzbehälters ist dadurch möglich, wenn der Kupplungsteil als hinterschittene Nut und der Gegenklupplungsteil als zur Nut korrespondierendes Gegenstück ausgebildet ist, wobei zweckmäßig die Nut einen schwalbenschwanzförmigen Querschnitt aufweist.

Zur Sicherung der richtigen Lage des Gegenkupplungsteiles am Pflanzbehälter ist vorteilhaft die Nut am unteren Ende mit einem Anschlag versehen, an den der Gegenkupplungsteil zur Anlage gelangen kann.

Eine besonders zweckmäßige, weil stabile Konstruktion, ist dadurch gekennzeichnet, daß die Nut sich in vertikaler Richtung erstreckt und die Nutwände mit dem Pflanzbehälter integral ausgebildet sind.

Um mit einem einzigen Modell einer Pflanzstab-Fixiereinrichtung das Auslangen zu finden, sind zwei Pflanzstab-Fixiereinrichtungen mittels einer Gelenkverbindung verbunden, wobei die Gelenkverbindung eine sich etwa in vertikaler Richtung erstreckende Schwenkachse aufweist, und wobei vorteilhaft die Schwenkachse vom Pflanzstab gebildet ist. Hierdurch erübrigt sich eine besondere Konstruktion für die Schwenkachse.

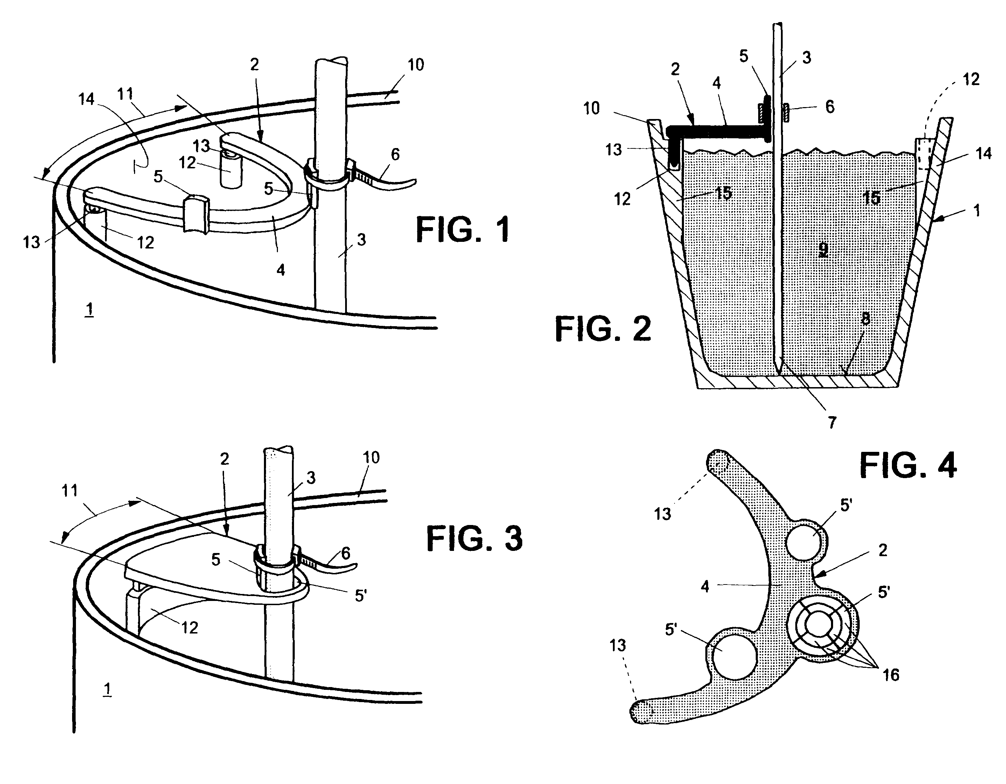

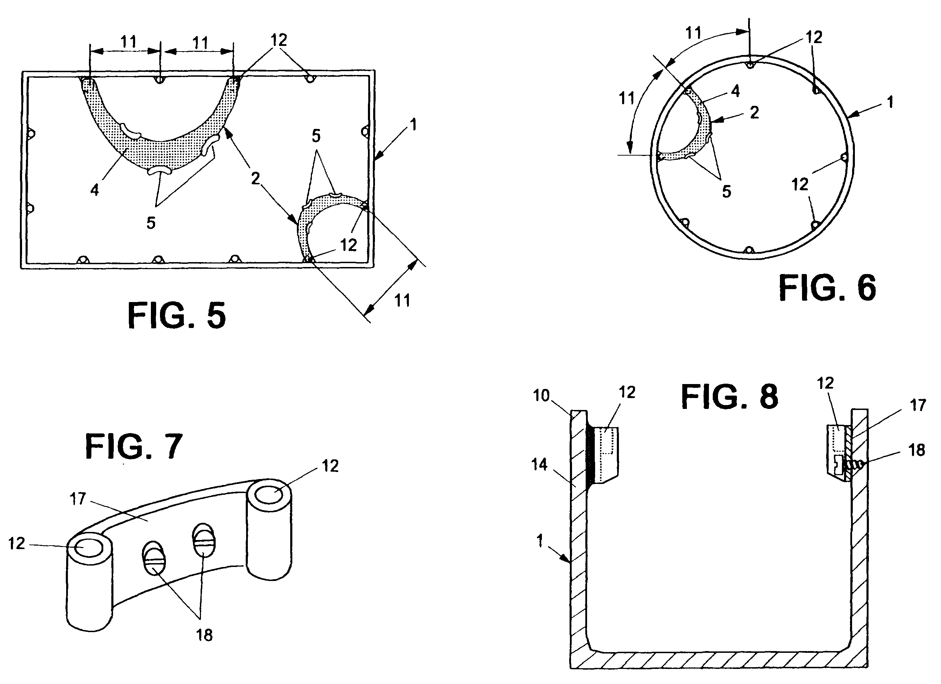

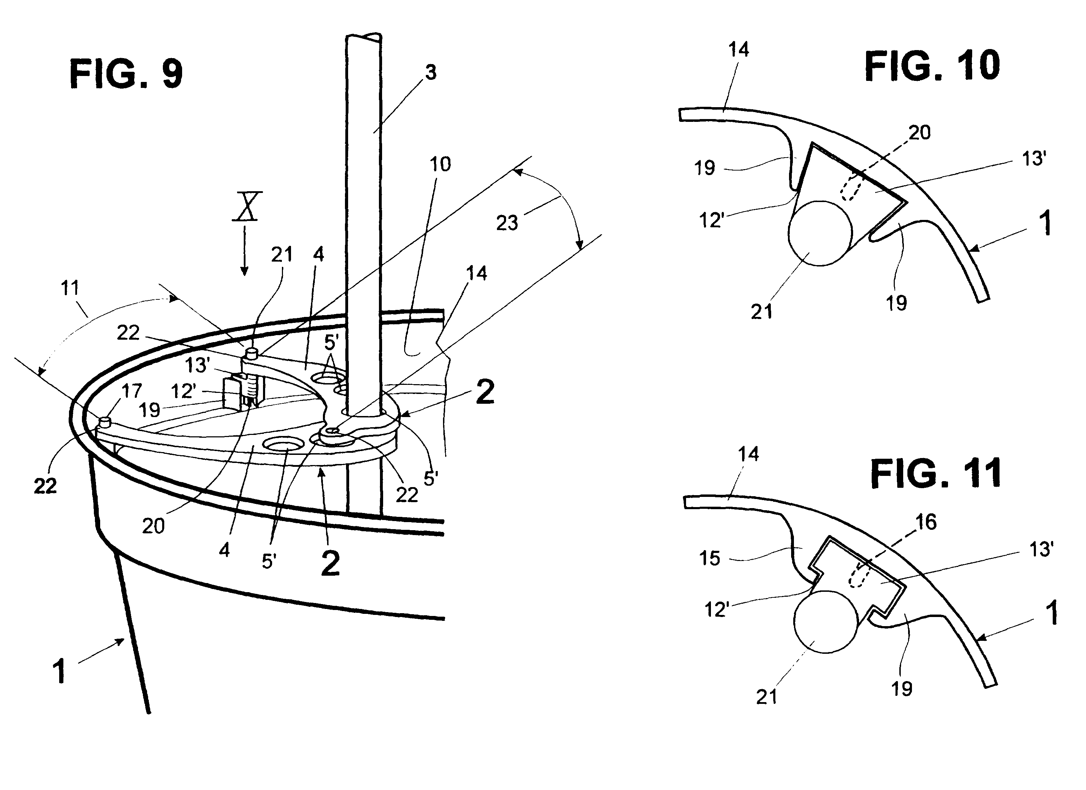

Die Erfindung ist nachstehend anhand mehrerer in der Zeichnung dargestellter Ausführungsformen näher erläutert, wobei Fig. 1 ein Detail eines Pflanzbehälters mit montierter Pflanzstab-Fixiereinrichtung im Schrägriß veranschaulicht. Fig. 2 zeigt einen Vertikalschnitt durch einen Pflanzbehälter anderer Bauart. Fig. 3 veranschaulicht eine geänderte Ausführungsform in zu Fig. 1 analoger Darstellung. Fig. 4 zeigt eine Pflanzstab-Fixiereinrichtung in Draufsicht. In den Fig. 5 und 6, die jeweils eine Draufsicht auf einen Pflanzbehälter mit eingesetzter Pflanzstab-Fixiereinrichtung zeigen, sind verschiedene Anordnungsarten der Pflanzstab-Fixiereinrichtung dargestellt. Fig. 7 zeigt ein Detail der Pflanzstab-Fixiereinrichtung und Fig. 8 die Anordnung dieses Details in einem Pflanzbehälter. Weitere vorteilhafte Ausführungsformen sind in den Fig. 9 bis 11 veranschaulicht, wobei Fig. 9 ein Detail eines Pflanzbehälters mit montierter Pflanzstab-Fixiereinrichtung analog zu Fig. 1 zeigt. Die Fig. 10 zeigt eine Ansicht von oben in vergrößertem Maßstab in Richtung des Pfeiles X der Fig. 9. Fig. 11 veranschaulicht eine geänderte Ausführungsform in zu Fig. 10 analoger Darstellung.

An einem Pflanzbehälter 1, der vorzugsweise aus Kunststoff gefertigt ist, ist eine Pflanzstab-Fixiereinrichtung 2 befestigt, an der ein Pflanzstab 3 fixiert ist. Die Pflanzstab-Fixiereinrichtung 2 ist im wesentlichen von einem etwa U-förmig gebogenen, vorzugsweise aus Kunststoff gefertigten Teil 4 gebildet, der mit mindestens einem Halteteil 5, an dem der Pflanzstab 3 fixierbar ist, versehen ist. Gemäß Fig. 1 sind zwei Halteteile 5 vorgesehen, die jeweils als Stützlaschen ausgebildet sind.

An einem der Halteteile 5 ist der Pflanzstab 3 zum Anliegen gebracht und mittels einer Klemmeinrichtung 6, die z.B. als Kabelbinder ausgebildet ist, fixiert. Der zweite Halteteil kann zum Befestigen eines weiteren Pflanzstabes 3 dienen, oder es kann der Pflanzstab 3 wahlweise an dem zweiten Halteteil fixiert werden. Der Pflanzstab 3 reicht mit seinem unteren Ende 7 bis zum Boden 8 des Pflanzbehälters 1, wo er abgestützt ist. Das untere Ende 7 des Pflanzstabes 3 ist gegen seitliches Verschieben hinreichend durch die Pflanzerde 9 gesichert (Fig. 2).

Die Pflanzstab-Fixiereinrichtung 2 ist am Pflanzbehälter 1, u.zw. in Höhe dessen Randbereiches 10, starr befestigt, u.zw. mit Hilfe zweier im Umfangsabstand 11 voneinander am Randbereich 10 des Pflanzbehälters 1 vorgesehener Kupplungsteile 12, die mit an der Pflanzstab-Fixiereinrichtung 2 angeordneten Gegenkupplungsteilen 13 kuppelbar sind. Die Kupplungsteile 12 sind hier als Hülsen ausgebildet, die Gegenkupplungsteile 13 als in die Hülsen einsetzbare Zapfen. Selbstverständlich könnten die Kupplungsteile 12 und Gegenkupplungsteile 13 auch anders gestaltet sein, z.B. könnten sie als Kugelschnappverbindungen ausgebildet sein. Die Kupplungsteile 12 sind gemäß Fig. 1 integral mit der Seitenwand 14 des Pflanzbehälters 1 ausgebildet.

Gemäß Fig. 2 sind die Kupplungsteile 12 in Keilansätzen 15, die an die schräg ausgebildete Seitenwand 14 des Pflanzbehälters 1 angegossen sind, vorgesehen.

Fig. 3 zeigt die Ausbildung eines Kupplungsteiles 12 als sich über einen bestimmten Umfangsbereich 11 des Pflanzbehälters 1 erstreckender Schlitz, in den der Gegenkupplungsteil 13, der hier als Lasche ausgebildet ist, einsetzbar ist. Der Halteteil der Pflanzstab-Fixiereinrichtung 2 ist hier als Durchgangsöffnung 5' gestaltet, durch die der Pflanzstab 3 hindurchgesteckt wird. Zusätzlich ist hier noch eine Stützlasche 5 vorgesehen, um den Pflanzstab spielfrei in der Durchgangsöffnung halten zu können. Auch hier dient ein Kabelverbinder 6 zur Fixierung des Pflanzstabes 3 an der Stützlasche 5.

Gemäß Fig. 4 ist eine der Durchgangsöffnungen 5' mit ausbrechbaren Teilen 16 versehen, so daß die Durchgangsöffnung 5 an den Durchmesser des Pflanzstabes 3 anpaßbar ist.

Die Fig. 5 und 6 zeigen unterschiedliche Anbringungsarten einer Pflanzstab-Fixiereinrichtung 2 an einem Pflanzbehälter 1. Der Pflanzbehälter 1 ist mit an seinem Randbereich 10 in gleichmäßigen Abständen 11 angeordneten Kupplungsteilen 12 versehen, und die Pflanzstab-Fixiereinrichtung 2 weist Gegenkupplungsteile 13 auf, die in einer Distanz vorgesehen sind, die genau dem einfachen oder doppelten oder gar dreifachen Abstand 11 zweier benachbarter Kupplungsteile 12 entspricht.

In Fig. 7 sind zwei Kupplungsteile 12, die ebenfalls als Hülsen ausgebildet sind, veranschaulicht, die mittels an einem Verbindungssteg 17 angeordneter Schrauben 18 an einen Pflanzbehälter 1 nachträglich anbringbar sind. Fig. 8 veranschaulicht die Anbringung dieser Kupplungsteile 12 an einen Pflanzbehälter 1. Die Kupplungsteile 12 könnten auch, wie in der linken Seite der Fig. 8 dargestellt, am Pflanzbehälter 1 angeklebt sein.

Gemäß Fig. 9 und 10 ist die Pflanzstab-Fixiereinrichtung 2 am Pflanzbehälter 1, u.zw. in Höhe dessen Randbereiches 10, starr befestigt, u.zw. ebenfalls mit Hilfe zweier im Umfangsabstand 11 voneinander am Randbereich 10 des Pflanzbehälters 1 vorgesehener Kupplungsteile 12', die mit Gegenkupplungsteilen 13' an der Pflanzstab-Fixiereinrichtung 2 kuppelbar sind. Die Kupplungsteile 12' sind hier als hinterschnittene und vertikal ausgerichtete Nuten ausgebildet, die Gegenkupplungsteile 13' als in die Nuten einschiebbare Klötze. Die Kupplungsteile 12' und Gegenkupplungsteile 13' könnten auch anders gestaltet sein, z.B. könnten sie als Schnappverbindungen mit unterschiedlichen Gestaltungen ausgebildet sein. Die Nutwände 19 sind vorzugsweise integral mit der Seitenwand 14 des Pflanzbehälters 1 ausgebildet, d.h. im selben Herstellungsverfahren hergestellt, was sich anbietet, wenn der Pflanzbehälter aus Kunststoff gefertigt ist. Sie könnten jedoch auch mit dem Pflanzbehälter 1 nachträglich verbunden werden, z.B. durch Kleben etc.

Gemäß der in Fig. 11 dargestellten Ausführungsform ist die hinterschnittene Nut 12' mit einem rechteckförmigen Querschnitt gestaltet, und der in die Nut einschiebbare Gegenkupplungsteil 13' weist ein entsprechendes Gegenprofil auf. Der Gegenkupplungsteil 13' läßt sich für alle Ausführungsformen möglichst spielfrei, jedoch zweckmäßig von Hand aus, in die Nut 12' einsetzen. Am unteren Ende der Nut ist ein Anschlag 20 vorgesehen, der z.B. als mit dem Pflanzbehälter 1 integral hergestellter Steg ausgebildet ist.

Der Gegenkupplungsteil 13' trägt einen Zapfen 21, der in eine eine zum Zapfen möglichst spielfrei passende Hülse bildende Bohrung 22 der Pflanzstab-Fixiereinrichtung 2 paßt. Jede Pflanzstab-Fixiereinrichtung 2 weist zwei solche Bohrungen 22 auf, die jeweils an deren Enden vorgesehen sind. Die Pflanzstab-Fixiereinrichtung 2 ist bogenförmig gestaltet, so daß die Durchgangsöffnungen 5', die sie aufweist, bei Befestigen einer einzelnen Pflanzstab-Fixiereinrichtung an den Zapfen 21 der Gegenkupplungsteile 13' in Distanz vom Randbereich 10 des Pflanzbehälters 1 zu liegen kommen. Der Abstand 11 der Kupplungsteile 12' am Pflanzbehälter 1 entspricht der Entfernung 23 der beiden endseitig angebrachten Bohrungen 22 bzw. Hülsen der Pflanzstab-Fixiereinrichtung 2.

Gemäß Fig. 9 sind zwei Pflanzstab-Fixiereinrichtungen 2 miteinander gekuppelt, u.zw. durch eine Gelenkverbindung, die durch den Pflanzstab 3 gebildet ist, der durch jeweils eine der zur Deckung gebrachten Durchgangsöffnungen 5' der Pflanzstab-Fixiereinrichtungen 2 hindurchragt. Hierdurch ist es möglich, auch bei Pflanzbehältern 1 mit größeren Durchmessern mit nur zwei Kupplungsteilen 12' auszukommen und trotzdem den Pflanzstab 3 in größerer Entfernung vom Randbereich 10 des Pflanzbehälters 1 anzuordnen.

Anstelle der Zapfen-Hülsen-Verbindung zwischen dem Gegenkupplungsteil und der Pflanzstab-Fixiereinrichtung 2 kann auch eine andere Art von Verbindung vorgesehen sein, beispielsweise eine Schnappverbindung. Vorteilhaft weist jedoch diese Verbindung in jedem Fall eine sehr beschränkte Schwenkmöglichkeit in einer vertikalen Ebene auf. Wesentlich ist jedoch die Schwenkmöglichkeit in horizontaler Ebene, so daß die Anordnung zweier Pflanzstab-Fixiereinrichtungen 2, wie in Fig. 9 veranschaulicht, möglich ist. Der Pflanzstab 3 kann durch verschiedene frei wählbare zur Deckung gebrachte Durchgangsöffnungen 5' hindurchgesteckt werden kann, zu welchem Zweck die beiden Pflanzstab-Fixiereinrichtungen 2 mit dem Pflanzbehälter 1 mittels einer diese Schwenkmöglichkeit in horizontaler Richtung zulassenden Gelenkverbindung 21, 22 verbunden sind.

Die Erfindung beschränkt sich nicht auf die dargestellten Ausführungsbeispiele, sondern sie kann in verschiedener Hinsicht modifiziert werden. Beispielsweise muß die Pflanzstab-Fixiereinrichtung 2 im Grundriß gesehen nicht etwa U-förmig gestaltet sein, sie könnte auch eine andere Grundrißgestalt einnehmen. Wichtig ist lediglich, daß der Pflanzstab 3 in Distanz von der Seitenwand 14 des Pflanzbehälters 1 angeordnet werden kann und daß die Pflanzstab-Fixiereinrichtung 2 einen oder zwei Gegenkupplungsteile 13, 13' aufweist, die mit den an der Seitenwand 14 des Pflanzbehälters 1 angeordneten Kupplungsteilen 12, 12' in Eingriff bringbar sind. Hinsichtlich der Gestaltungsmöglichkeit der Kupplungs- 12, 12' und Gegenkupplungsteile 13, 13' hat der Konstrukteur volle Freiheit. Es muß lediglich gesichert sein, daß die Pflanzstab-Fixiereinrichtung in der Ebene des oberen Randes 10 des Pflanzbehälters 1 nicht seitlich ausweichen kann.

Soll eine Pflanzstab-Fixiereinrichtung 2 für Pflanzbehälter mit unterschiedlich geneigten Wänden anwendbar sein, so ist zweckmäßig der Kupplungsteil 12, 12' und der Gegenkupplungsteil 13, 13' jeweils als Gelenkteil ausgebildet, so daß die Pflanzstab-Fixiereinrichtung 2 trotz unterschiedlich geneigter Seitenwände 14 des Pflanzbehälters 1 etwa in horizontaler Lage angeordnet werden kann.

## Patentansprüche

1. Pflanzbehälter (1) mit einer Pflanzstab-Fixiereinrichtung (2), gekennzeichnet durch die Kombination folgender Merkmale:
• der Pflanzbehälter (1) weist in seinem Randbereich (10) zwei starr mit der Seitenwand (14) des Pflanzbehälters (1) verbundene und in einem vorbestimmten Abstand (11) voneinander angeordnete Kupplungsteile (12) auf,
• die Pflanzstab-Fixiereinrichtung (2) weist zwei in dem vorbestimmten Abstand (11) voneinander angeordnete Gegenkupplungsteile auf,
• die Pflanzstab-Fixiereinrichtung (2) weist mindestens einen Halteteil (5, 5', 6) auf, der als Halterung für einen Pflanzstab (3) dient, wobei
• der Pflanzstab sich durch den Halteteil (5, 5', 6) hindurch bis in den Bodenbereich des Pflanzbehälters erstreckt.

2. Pflanzbehälter (1) nach Anspruch 1, dadurch gekennzeichnet, daß die Kupplungsteile (12), wie an sich bekannt, integral mit der Seitenwand (14) des Pflanzbehälters (1) ausgebildet sind.

3. Pflanzbehälter (1) nach Anspruch 1 oder 2, dadurch gekennzeichnet, daß eine Mehrzahl von Kupplungsteilen (12) im Randbereich (10) des Pflanzbehälters (1) angeordnet ist, wobei jeweils zwei dieser Kupplungsteile (12) in einem Abstand (11) angeordnet sind, der dem Abstand der Gegenkupplungsteile (13) der Pflanzstab-Fixiereinrichtung (2) entspricht.

4. Pflanzbehälter (1) nach Anspruch 3, dadurch gekennzeichnet, daß die Kupplungsteile (12) am Randbereich (10) des Pflanzbehälters (1) in untereinander gleichen Abständen (11) angeordnet sind.

5. Pflanzbehälter (1) nach Anspruch 4, dadurch gekennzeichnet, daß die Pflanzstab-Fixiereinrichtung (2) mit zwei Gegenkupplungsteilen (13) versehen ist, die in einer Distanz vorgesehen sind, die dem doppelten oder einem mehrfachen Abstand (11) zweier Kupplungsteile (12) entspricht.

6. Pflanzbehälter (1) nach einem oder mehreren der Ansprüche 1 bis 5, dadurch gekennzeichnet, daß der Kupplungsteil (12) - wie an sich bekannt - von einer Hülse oder einem Zapfen gebildet ist und der Gegenkupplungsteil (13) von einem Zapfen oder einer Hülse gebildet ist.

7. Pflanzbehälter (1) mit einer Pflanzstab-Fixiereinrichtung (2), gekennzeichnet durch die Kombination folgender Merkmale:
• der Pflanzbehälter (1) weist in seinem Randbereich (10) einen starr mit der Seitenwand (14) des Pflanzbehälters (1) verbundenen und sich über einen vorbestimmten Umfangsbereich erstreckenden Kupplungsteil (12) auf,
• die Pflanzstab-Fixiereinrichtung (2) weist einen sich über einen vorbestimmten Umfangsbereich erstreckenden Gegenkupplungsteil auf,
• die Pflanzstab-Fixiereinrichtung (2) weist mindestens einen Halteteil (5, 5', 6) auf, der als Halterung für einen Pflanzstab (3) dient, wobei
• der Pflanzstab sich durch den Halteteil (5, 5', 6) hindurch bis in den Bodenbereich des Pflanzbehälters erstreckt.

8. Pflanzbehälter (1) nach Anspruch 7, dadurch gekennzeichnet, daß der Kupplungsteil (12) als Lasche oder Schlitz und der Gegenkupplungsteil (13) als Schlitz oder Lasche ausgebildet sind (Fig. 3).

9. Pflanzbehälter (1) nach einem oder mehreren der Ansprüche 1 bis 8, dadurch gekennzeichnet, daß der Kupplungsteil (12) an der Seitenwand (14) des Pflanzbehälters (1) angeschraubt ist (Fig. 7, 8).

10. Pflanzbehälter (1) nach einem oder mehreren der Ansprüche 1 bis 8, dadurch gekennzeichnet, daß der Kupplungsteil (12) an der Seitenwand (14) des Pflanzbehälters (1) angeklebt ist (Fig. 8).

11. Pflanzbehälter (1) nach einem oder mehreren der Ansprüche 1 bis 10, dadurch gekennzeichnet, daß der Kupplungsteil (12) an der Innenseite der Seitenwand (14) des Pflanzbehälters (1) vorgesehen ist.

12. Pflanzbehälter (1) nach einem oder mehreren der Ansprüche 1 bis 11, dadurch gekennzeichnet, daß die Pflanzstab-Fixiereinrichtung (2) mit zwei oder mehreren, jeweils im unterschiedlichen Abstand vom Gegenkupplungsteil (13) vorgesehenen Halteteilen (5, 5') versehen ist.

13. Pflanzbehälter (1) nach einem oder mehreren der Ansprüche 1 bis 12, dadurch gekennzeichnet, daß der Halteteil als Durchgangsöffnung (5') ausgebildet ist (Fig. 3, 4).

14. Pflanzbehälter (1) nach Anspruch 13, dadurch gekennzeichnet, daß die Durchgangsöffnung (5') mit ausbrechbaren Teilen (16) versehen ist, so daß sie vergrößerbar und an den Durchmesser des Pflanzstabes (3) anpaßbar ist.

15. Pflanzbehälter (1) nach einem oder mehreren der Ansprüche 1 bis 14, dadurch gekennzeichnet, daß der Halteteil (5) als Stützlasche ausgebildet ist, an der der Pflanzstab (3) zum Anliegen bringbar ist und an der der Pflanzstab mittels einer Klemmeinrichtung (6), vorzugsweise einem Kabelbinder, fixierbar ist.

16. Pflanzbehälter (1) nach einem oder mehreren der Ansprüche 1 bis 15, dadurch gekennzeichnet, daß die Pflanzstab-Fixiereinrichtung (2) in sich starr ausgebildet ist.

17. Pflanzbehälter (1) nach einem oder mehreren der Ansprüche 1 bis 16, dadurch gekennzeichnet, daß der Kupplungsteil (12) und der Gegenkupplungsteil (13) als Gelenkteile ausgebildet sind.

18. Pflanzbehälter nach einem oder mehreren der Ansprüche 1 bis 17, dadurch gekennzeichnet, daß der Gegenkupplungsteil (13') mit mindestens einer Pflanzstab-Fixiereinrichtung (2) mittels einer Gelenkverbindung (21, 22) verbunden ist.

19. Pflanzbehälter nach Anspruch 18, dadurch gekennzeichnet, daß die Gelenkverbindung (21, 22) als Zapfen-Hülsen-Verbindung ausgebildet ist.

20. Pflanzbehälter nach Anspruch 19, dadurch gekennzeichnet, daß der Zapfen (21) am Gegenkupplungsteil (13') und die Hülse (22) an der Pflanzstab-Fixiereinrichtung (2) vorgesehen ist.

21. Pflanzbehälter nach einem oder mehreren der Ansprüche 18 bis 20, dadurch gekennzeichnet, daß der Kupplungsteil (12') als hinterschittene Nut und der Gegenklupplungsteil (13') als zur Nut (12') korrespondierendes Gegenstück ausgebildet ist.

22. Pflanzbehälter nach Anspruch 21, dadurch gekennzeichnet, daß die Nut (12') einen schwalbenschwanzförmigen Querschnitt aufweist.

23. Pflanzbehälter nach Anspruch 21 oder 22, dadurch gekennzeichnet, daß die Nut (12') am unteren Ende mit einem Anschlag (20) versehen ist, an den der Gegenkupplungsteil (13') zur Anlage gelangen kann.

24. Pflanzbehälter nach einem oder mehreren der Ansprüche 21 bis 23, dadurch gekennzeichnet, daß die Nut (12') sich in vertikaler Richtung erstreckt und die Nutwände (15) mit dem Pflanzbehälter (1) integral ausgebildet sind.

25. Pflanzbehälter nach einem oder mehreren der Ansprüche 18 bis 24, dadurch gekennzeichnet, daß zwei Pflanzstab-Fixiereinrichtungen (2) mittels einer Gelenkverbindung (5', 3) verbunden sind, wobei die Gelenkverbindung (5', 3) eine sich etwa in vertikaler Richtung erstreckende Schwenkachse (3) aufweist.

26. Pflanzbehälter nach Anspruch 25, dadurch gekennzeichnet, daß die Schwenkachse vom Pflanzstab (3) gebildet ist.

## Revendications

1. Contenant pour plante (1) avec dispositif de fixation de tige (2) caractérisé par la combinaison des caractéristiques suivantes :
• le contenant pour plante (1) comporte dans sa zone de bord (10) deux parties de couplage (12) qui sont agencées à une distance prédéterminée (11) l'une de l'autre et qui sont reliées rigidement à la paroi latérale (14) du contenant pour plante (1),
• le dispositif de fixation de tige (2) comporte deux parties de couplage complémentaires agencées à la distance prédéterminée (11) l'une de l'autre,
• le dispositif de fixation de tige (2) comporte au moins une partie de maintien (5, 5', 6) qui sert de fixation pour une tige (3),
• la tige s'étend à travers la partie de maintien (5, 5', 6) dans la zone du fond du contenant pour plante.

2. Contenant pour plante (1) selon la revendication 1, caractérisé en ce que les parties de couplage (12), telles que celles connues, sont conçues intégrées à la paroi latérale (14) du contenant pour plante (1).

3. Contenant pour plante (1) selon la revendication 1 ou 2, caractérisé en ce qu'une multiplicité de parties de couplage (12) est agencée dans la zone de bord (10) du contenant pour plante (1), à chaque fois deux de ces parties de couplage (12) étant agencées à une distance (11) qui correspond à la distance des parties de couplage complémentaires (13) du dispositif de fixation de tige (2).

4. Contenant pour plante (1) selon la revendication 3, caractérisé en ce que les parties de couplage (12) sont agencées sur la zone de bord (10) du contenant pour plante (1) à des distances (11) égales les unes aux autres.

5. Contenant pour plante (1) selon la revendication 4, caractérisé en ce que le dispositif de fixation de tige (2) est muni de deux parties de couplage complémentaires (13) qui sont prévues à une certaine distance qui correspond au double ou à un multiple de la distance (11) de deux parties de couplage (12).

6. Contenant pour plante (1) selon une ou plusieurs des revendications 1 à 5, caractérisé en ce que la partie de couplage (12) - telle celle connue - est formée par un manchon ou par un tenon et la partie de couplage complémentaire (13) par un tenon ou par un manchon.

7. Contenant pour plante (1) avec un dispositif de fixation de tige (2), caractérisé par la combinaison des caractéristiques suivantes :
• le contenant pour plante (1) comporte dans sa zone de bord (10) une partie de couplage (12) qui s'étend sur une zone circonférentielle prédéterminée et qui est reliée rigidement à la paroi latérale (14) du contenant pour plante (1),
• le dispositif de fixation de tige (2) comporte une partie de couplage complémentaire qui s'étend sur une zone circonférentielle prédéterminée,
• le dispositif de fixation de tige (2) comporte au moins une partie de maintien (5, 5', 6) qui sert de fixation pour une tige (3),
• la tige s'étend à travers la partie de maintien (5, 5', 6) dans la zone du fond du contenant pour plante.

8. Contenant pour plante (1) selon la revendication 7, caractérisé en ce que la partie de couplage (12) est conçue comme une languette ou comme une fente et la partie de couplage complémentaire (13) comme une fente ou comme une languette (figure 3).

9. Contenant pour plante (1) selon une ou plusieurs des revendications 1 à 8, caractérisé en ce que la partie de couplage (12) est vissée sur la paroi latérale (14) du contenant pour plante (1) (figures 7, 8).

10. Contenant pour plante (1) selon une ou plusieurs des revendications 1 à 8, caractérisé en ce que la partie de couplage (12) est collée sur la paroi latérale (14) du contenant pour plante (1) (figure 8).

11. Contenant pour plante (1) selon une ou plusieurs des revendications 1 à 10, caractérisé en ce que la partie de couplage (12) est prévue sur le côté intérieur de la paroi latérale (14) du contenant pour plante (1).

12. Contenant pour plante (1) selon une ou plusieurs des revendications 1 à 11, caractérisé en ce que le dispositif de fixation de tige (2) est muni de deux ou plusieurs parties de maintien (5, 5') prévues à chaque fois à une distance différente de la partie de couplage complémentaire (13).

13. Contenant pour plante (1) selon une ou plusieurs des revendications 1 à 12, caractérisé en ce que la partie de maintien est conçue comme une ouverture de passage (5') (figures 3, 4).

14. Contenant pour plante (1) selon la revendication 13, caractérisé en ce que l'ouverture de passage (5') est munie de parties cassables (16) de telle sorte qu'elle peut être agrandie et adaptée au diamètre de la tige (3).

15. Contenant pour plante (1) selon une ou plusieurs des revendications 1 à 14, caractérisé en ce que la partie de maintien (5) est conçue comme une languette d'appui contre laquelle la tige (3) peut être amenée en appui et contre laquelle la tige peut être fixée au moyen d'un dispositif de serrage (6), de préférence au moyen d'un lien de câble.

16. Contenant pour plante (1) selon une ou plusieurs des revendications 1 à 15, caractérisé en ce que le dispositif de fixation de tige (2) est conçu rigide en soi.

17. Contenant pour plante (1) selon une ou plusieurs des revendications 1 à 16, caractérisé en ce que la partie de couplage (12) et la partie de couplage complémentaire (13) sont conçues comme des parties articulées.

18. Contenant pour plante selon une ou plusieurs des revendications 1 à 17, caractérisé en ce que la partie de couplage complémentaire (13') est reliée à au moins un dispositif de fixation de tige (2) au moyen d'une liaison articulée (21, 22).

19. Contenant pour plante selon la revendication 18, caractérisé en ce que la liaison articulée (21, 22) est conçue comme une liaison tenon-manchon.

20. Contenant pour plante selon la revendication 19, caractérisé en ce que le tenon (21) est prévu sur la partie de couplage complémentaire (13') et le manchon (22) sur le dispositif de fixation de tige (2).

21. Contenant pour plante selon une ou plusieurs des revendications 18 à 20, caractérisé en ce que la partie de couplage (12') est conçue comme une rainure en contre-dépouille et la partie de couplage complémentaire (13') comme une partie complémentaire de la rainure (12').

22. Contenant pour plante selon la revendication 21, caractérisé en ce que la rainure (12') a une section transversale en forme de queue-d'aronde.

23. Contenant pour plante selon la revendication 21 ou 22, caractérisé en ce que la rainure (12') est munie à son extrémité inférieure d'une butée (20) contre laquelle la partie de couplage complémentaire (13') peut venir s'appuyer.

24. Contenant pour plante selon une ou plusieurs des revendications 21 à 23, caractérisé en ce que la rainure (12') s'étend dans la direction verticale et en ce que les parois de rainure (15) sont conçues intégrées au contenant pour plante (1).

25. Contenant pour plante selon une ou plusieurs des revendications 18 à 24, caractérisé en ce que deux dispositifs de fixation de tige (2) sont reliés au moyen d'une liaison articulée (5', 3), la liaison articulée (5', 3) comportant un axe de pivotement (3) qui s'étend sensiblement dans la direction verticale.

26. Contenant pour plante selon la revendication 25, caractérisé en ce que l'axe de pivotement est formé par la tige (3) de la plante.

## Claims

1. Plant container (1) comprising a plant-stake fixing device (2), characterized by the combination of the following characteristic features:
• the plant container (1) in the region (10) of its rim is provided with two coupling components (12) rigidly connected with the side-wall (14) of the plant container (1) and arranged at a predetermined distance (11) from each other,
• the plant-stake fixing device (2) is provided with two mating coupling components arranged at the predetermined distance (11) from each other,
• the plant-stake fixing device (2) is provided with at least one retaining component (5, 5', 6) serving as a holder for a plant stake (3), wherein
• the plant stake extends through the retaining component (5, 5', 6) and into the bottom region of the plant container.

2. Plant container (1) according to claim 1, characterized in that the coupling components (12), as is known per se, are formed integrally with the side-wall (14) of the plant container (1).

3. Plant container (1) according to claim 1 or 2, characterized in that a plurality of coupling components (12) are arranged in the region (10) of the rim of the plant container (1), wherein in each instance two of these coupling components (12) are arranged at a distance (11) corresponding to the distance of the mating coupling components (13) of the plant-stake fixing device (2).

4. Plant container (1) according to claim 3, characterized in that the coupling components (12) are arranged in the region (10) of the rim of the plant container (1) at equal distances (11) from each other.

5. Plant container (1) according to claim 4, characterized in that the plant-stake fixing device (2) is provided with two mating coupling components (13) provided at a distance corresponding to twice or several times the distance (11) of two coupling components (12).

6. Plant container (1) according to one or several of claims 1 to 5, characterized in that the coupling component (12) - as is known per se - is formed by a sleeve or a pin and the mating coupling component (13) is formed by a pin or a sleeve.

7. Plant container (1) comprising a plant-stake fixing device (2), characterized by the combination of the following characteristic features:
• the plant container (1) in the region (10) of its rim is provided with a coupling component (12) rigidly connected with the side-wall (14) of the plant container (1) and extending over a predetermined circumferential region,
• the plant-stake fixing device (2) is provided with a mating coupling component extending over a predetermined circumferential region,
• the plant-stake fixing device (2) is provided with at least one retaining component (5, 5', 6) serving as a holder for a plant stake (3), wherein
• the plant stake extends through the retaining component (5, 5', 6) and into the bottom region of the plant container.

8. Plant container (1) according to claim 7, characterized in that the coupling component (12) is constructed as a strap or a slit and the mating coupling component (13) as a slit or a strap (Fig. 3).

9. Plant container (1) according to one or several of claims 1 to 8, characterized in that the coupling component (12) is screw-fastened to the side-wall (14) of the plant container (1) (Figs. 7, 8).

10. Plant container (1) according to one or several of claims 1 to 8, characterized in that the coupling component (12) is glued to the side-wall (14) of the plant container (1) (Fig. 8).

11. Plant container (1) according to one or several of claims 1 to 10, characterized in that the coupling component (12) is provided on the inner face of the side-wall (14) of the plant container (1).

12. Plant container (1) according to one or several of claims 1 to 11, characterized in that the plant-stake fixing device (2) is equipped with two or several retaining components (5, 5') of which each is provided at a different distance from the mating coupling component (13).

13. Plant container (1) according to one or several of claims 1 to 12, characterized in that the retaining component is constructed as a through hole (5') (Figs. 3, 4).

14. Plant container (1) according to claim 13, characterized in that the through hole (5') is provided with break-out parts (16) so that it can be enlarged and adjusted to the diameter of the plant stake (3).

15. Plant container (1) according to one or several of claims 1 to 14, characterized in that the retaining component (5) is constructed as a supporting strap against which the plant stake (3) can be brought to abutment and to which the plant stake can be fastened by means of a clamping device (6), preferably a cable-binding loop.

16. Plant container (1) according to one or several of claims 1 to 15, characterized in that the plant-stake fixing device (2) as such is of rigid construction.

17. Plant container (1) according to one or several of claims 1 to 16, characterized in that the coupling component (12) and the mating coupling component (13) are formed as the components of an articulation.

18. Plant container according to one or several of claims 1 to 17, characterized in that the mating coupling component (13') is connected with at least one plant-stake fixing device (2) through an articulated connection (21, 22).

19. Plant container according to claim 18, characterized in that the articulated connection (21, 22) is constructed as a pin-and-sleeve connection.

20. Plant container according to claim 19, characterized in that the pin (21) is provided on the mating coupling component (13') and the sleeve (22) on the plant-stake fixing device (2).

21. Plant container according to one or several of claims 18 to 20, characterized in that the coupling component (12') is formed as an undercut groove and the mating coupling component (13') as a corresponding counterpart of the groove (12').

22. Plant container according to claim 21, characterized in that the groove (12') exhibits a dovetailed cross-section.

23. Plant container according to claim 21 or 22, characterized in that the groove (12') at its lower end is provided with a stop (20) that the mating coupling component (13') can abut against.

24. Plant container according to one or several of claims 21 to 23, characterized in that the groove (12') extends in a vertical direction and the groove walls (15) are formed integrally with the plant container (1).

25. Plant container according to one or several of claims 18 to 24, characterized in that two plant-stake fixing devices (2) are connected by means of an articulated connection (5', 3), the articulated connection (5', 3) having a swivel axis (3) that extends in a roughly vertical direction.

26. Plant container according to claim 25, characterized in that the swivel axis is formed by the plant stake (3).
